Europäisches Patentamt

European Patent Office

Office européen des brevets

(19)

(11) Numéro de publication: **0 250 290
B1**

(12) **FASCICULE DE BREVET EUROPEEN**

(45) Date de publication du fascicule du brevet:
16.08.90

(21) Numéro de dépôt: **87401265.1**

(22) Date de dépôt: **04.06.87**

(51) Int. Cl.⁵: **B60N 2/22,** A47C 1/00,
F16C 11/00

(54) Articulations pour dossier de siège de véhicule ou applications analogues comportant des grains à guidages asymétriques.

(30) Priorité: **06.06.86 FR 8608211**

(43) Date de publication de la demande:
**23.12.87 Bulletin 87/52**

(45) Mention de la délivrance du brevet:
**16.08.90 Bulletin 90/33**

(84) Etats contractants désignés:
**AT BE CH DE ES GB GR IT LI LU NL SE**

(56) Documents cités:
**EP-A- 0 023 863
FR-A- 2 258 817
FR-A- 2 277 551**

(73) Titulaire: **A. & M. COUSIN Etablissements COUSIN
FRERES, Le Bois de Flers, F-61103 Flers Cédex
Orne(FR)**

(72) Inventeur: **Pipon, Yves, "La Garenne"
St-Georges-des-Groseillers, F-61100 Flers(FR)**
Inventeur: **Droulon, Georges, 16 rue de la Garenne,
St-Georges-des-Groseillers, F-61100 Flers(FR)**

(74) Mandataire: **Madeuf, René Louis et al, Cabinet Madeuf
Conseils en Propriété Industrielle 3, Avenue Bugeaud,
F-75116 Paris(FR)**

## Description

Il est bien connu que les grains favorisent une augmentation du nombre de positions d'inclinaison du dossier de sièges par rapport à une assise dans la mesure où la denture fixe de la couronne mobile et la denture des grains sont très petites.

Mais ces dispositifs comportent des inconvénients nombreux, en particulier des jeux assez importants du fait de la fabrication des pièces, ce qui entraîne un déplacement angulaire du dossier qui est néfaste au confort de l'utilisateur du siège.

Ces articulations permettant de positionner le dossier par rapport à une assise, sont basées sur la mise en place des grains de blocage de façon à ce que les dents, réalisées sur la couronne dentée et sur les grains se situent en regard les unes des autres avec un décalage d'un angle égal à celui d'une dent. On ne peut donc pas, ou peu, à l'aide de ces mécanismes, compenser les jeux et, de plus, l'angle minimum entre deux positions du dossier est égal à l'angle d'une dent.

On connaît par le EP-A 0 023 863 un dispositif d'articulation de dossier de siège dans lequel le flasque fixe et le flasque mobile sont pourvus tous les deux intérieurement d'une denture destinée à coopérer simultanément avec des verrous dentés, par exemple au nombre de trois, qui sont guidés dans leur mouvement de translation radiale par des guides mais avec un certain frottement. Le mouvement radial des verrous est provoqué par des bossages inclinés d'une came centrale commandée par un levier à bouton de manœuvre. De plus, ce levier est soumis à l'action d'un ressort tendant à placer la commande dans la position pour laquelle elle repousse les verrous sur la périphérie du mécanisme d'articulation pour bloquer la denture de chacun de ces verrous dans les dentures correspondantes des flasques fixe et mobile. Le léger frottement prévu entre les guides fixes et les verrous permet, quelle que soit la position relative des dentures des flasques fixe et mobile, une pénétration complète des dents des verrous dans les dents des flasques fixe et mobile. Cette construction n'évite donc pas les inconvénients énoncés ci-dessus.

La présente invention remédie à ces inconvénients en créant une articulation qui permet un plus grand nombre de positions de verrouillage par rapport au nombre de dents réalisées sur la couronne fixe de verrouillage par l'emploi de trois grains et par le décalage angulaire d'une certaine valeur de deux des grains permettant ainsi la pénétration des dents d'un des grains en fond de dent de la couronne de verrouillage et pour les deux autres grains, une pénétration partielle des dents des grains dans la couronne de verrouillage provoquant le blocage sans jeu de l'articulation dans toutes les positions avec un décalage angulaire très faible égal au tiers de l'angle de chaque dent de la couronne de blocage.

Cette solution permet également de réaliser la denture de la couronne de verrouillage et des grains par des procédés très rapides et meilleur marché car l'angle de chaque dent est suffisamment important pour permettre l'emploi de procédés de fabrication à haut rendement puisque de toute façon le déplacement angulaire est égal à 1/3 de l'angle de chaque dent étant donné que l'articulation comporte toujours au minimum trois grains disposés pour obtenir les 360° de la circonférence, ce qui correspond pour le cas à trois grains à des positions de 120° − α/3; 120° + 2/3 α; 120° − α/3.

Par rapport à EP-A 0 023 863 qui décrit une articulation pour dossier de siège de véhicule ou applications analogues comportant des grains de verrouillage dans laquelle le flasque fixe est conformé de façon à guider, au moyen de secteurs, trois grains coulissants dont le pas de la denture supérieure correspond au pas de la denture de la couronne dentée du flasque mobile, ces grains, normalement repoussés de la denture par des organes élastiques, étant décalés angulairement et soumis à la poussée d'un organe de commande tel qu'une came, est caractérisée en ce que le décalage angulaire asymétrique de deux grains par rapport au premier grain est de 120°−α/3 c'est à dire que le décalage entre les deux autres grains est de 120°+2/3 α, α étant l'angle correspondant au pas d'une dent de la couronne dentée ou des grains de façon qu'au moins l'un des grains pénètre à fond de dent dans la couronne dentée tandis que les dents des autres grains prennent appui en partie sur les faces opposées des dents de la couronne dentée en assurant ainsi un verrouillage de l'articulation du dossier par rapport à l'assise du siège.

Suivant une autre caractéristique de l'invention, les grains dentés présentent des prolongements plus étroits en forme de queue tels que ces prolongements présentent un jeu de α/3 par rapport aux faces en regard des secteurs du flasque fixe, les grains présentant en outre à leur partie supérieure des zones évasées qui coopèrent avec des zones dégagées des secteurs du flasque fixe pour permettre, malgré le décalage angulaire de α/3 des deux autres grains par rapport au premier, leur centrage et leur pénétration dans la couronne dentée du flasque fixe lorsqu'ils sont repoussés par la commande à came.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La figure 1 est une vue de face schématique d'une articulation à trois grains conforme à l'invention.

La figure 2 est une vue correspondant à la figure 1 mais après une rotation angulaire égale à une valeur de débattement du point M de α/3.

La figure 3 est une variante de réalisation de l'articulation des figures 1 et 2, les grains étant dégagés de la couronne fixe dentée et auto-centrés dans leur guidage.

La figure 4 est une vue correspondant à la figure 3 mais avec des grains engagés dans la couronne fixe dentée.

La figure 5 est une vue d'une troisième forme de réalisation de l'objet de l'invention, les grains étant dégagés de la couronne dentée fixe et auto-centrés dans leur guidage.

La figure 6 correspond à la figure 5 mais avec les grains engagés dans la couronne dentée fixe.

La figure 7 est une élévation latérale, partie en coupe, de l'articulation des figures 5 et 6.

La figure 8 est une coupe diamétrale de l'articulation de la figure 7.

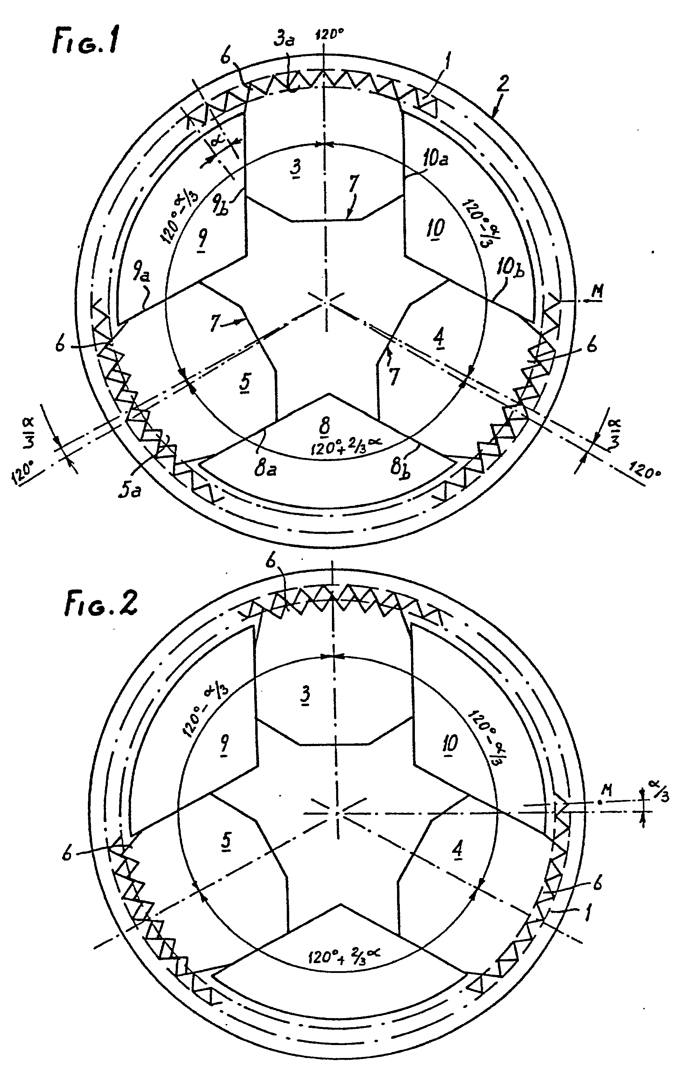

A la figure 1, on a représenté schématiquement une couronne dentée fixe 1 venue par emboutissage ou découpage fin sur le flasque mobile 2 d'une articulation de dossier de siège de véhicule. Comme on peut le voir, l'angle α correspond exactement à l'angle d'une dent de cette couronne. Les grains 3, 4, 5, qui ont une forme sensiblement carrée, présentent, à leurs extrémités supérieures 3a, 4a, 5a, une denture 6 ayant exactement le même angle α que la denture de la couronne 1. La partie arrière des grains 3, 4, 5 présente une surface centrale 7 qui coopère avec l'organe de commande, en générale une came. Les grains 3, 4, 5 sont guidés dans le flasque fixe représenté par des secteurs 8, 9, 10 solidaires du flasque fixe et qui forment, par leurs côtés convergents 8a, 8b, 9a, 9b, 10a, 10b, des guides pour les grains 3, 4, 5 mais du fait de la construction, d'une part, des secteurs 8, 9, 10 et, d'autre part, des grains 3, 4, 5, les grains 4 et 5 sont disposés à 120°−α/3 par rapport au grain 3. C'est pourquoi, lorsque les trois grains 3, 4, 5 sont repoussés par l'organe de commande vers la couronne dentée 1 du flasque mobile 2, la denture 6 du grain 3 pénètre à fond de dent dans la couronne dentée 1 mais les dentures 6 des grains 4, 5 prennent appui sur les côtés de la denture de la couronne 1 en ne pénétrant pas à fond de dent.

On obtient ainsi un calage parfait de l'articulation puisque les jeux sont compensés par une pénétration suffisante de la denture 6 des grains 4, 5 dans les dents de la couronne dentée 1.

Si l'on désire régler l'inclinaison du dossier d'une très petite valeur et que l'on débloque les grains 3, 4, 5, ceux-ci reculent et les dents 6 dégagent la denture de la couronne 1 en libérant ainsi le dossier par rapport à l'assise.

En effectuant un décalage angulaire égale à 1/3 du pas d'une dent, c'est-à-dire à α/3 on amène à ce moment le grain 4 en fond de dent (voir fig. 2). La denture 6 de ce grain pénètre donc dans le fond de dent de la couronne dentée 1 tandis que les dentures 6 des grains 3 et 5 sont bloquées sur les flancs de dent de la couronne dentée 1 en obtenant ainsi un blocage parfait et sans jeu du dossier par rapport à l'assise comme cela a été expliqué ci-dessus.

On constate donc que l'angle minimum de déplacement du dossier par rapport à l'assise peut être égal à α/3 c'est-à-dire à 1/3 de l'angle d'une dent de la couronne dentée 1 et, si l'angle α est petit, de l'ordre de 2°, on obtient une sensibilité de l'ordre de 40 mn ce qui était impossible à obtenir jusqu'à présent.

La réalisation des figures 1 et 2 donne une sensibilité très grande mais, comme cela a déjà a été décrit, la denture de deux des grains ne porte que sur une partie de la denture 1 de la couronne dentée.

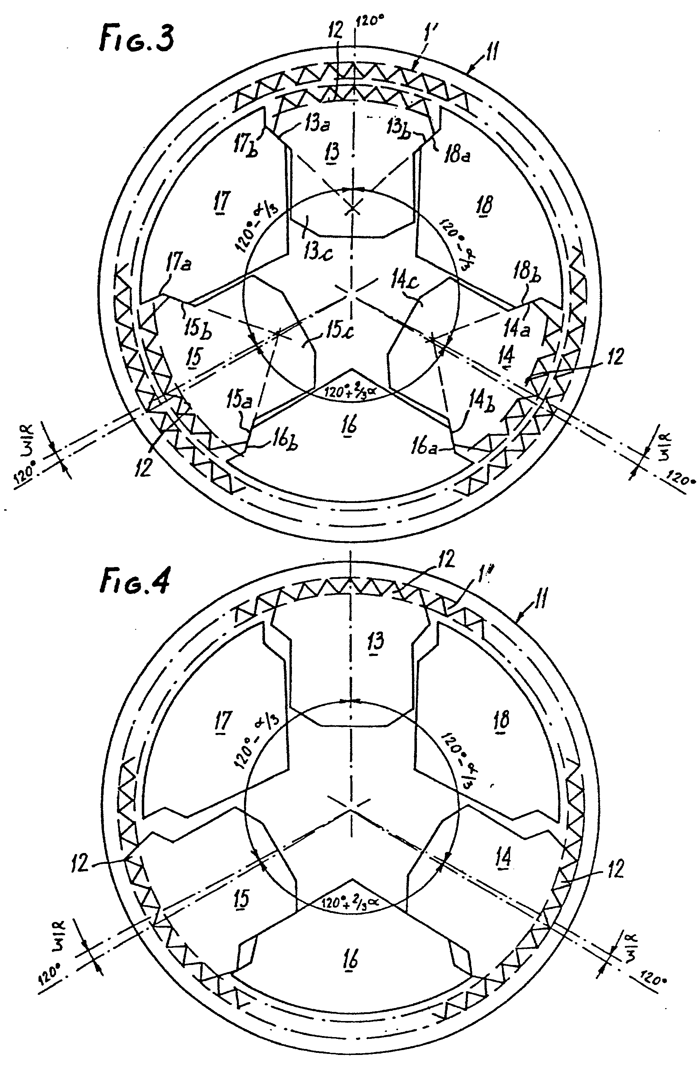

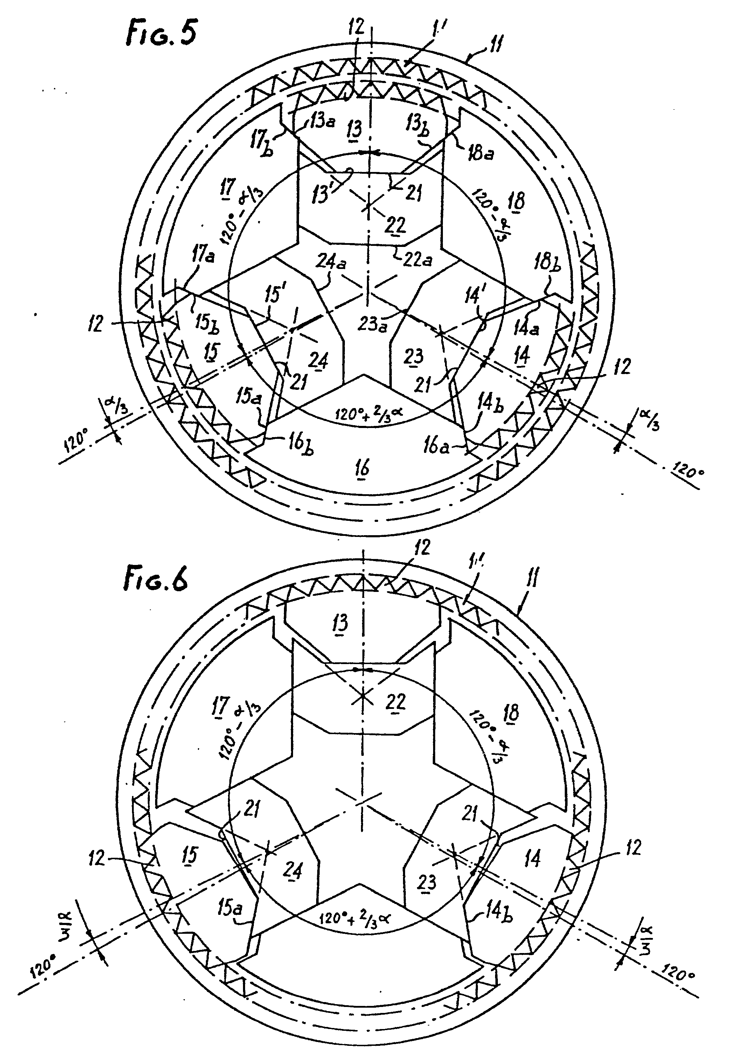

C'est pourquoi on a été amené à rechercher, pour augmenter la résistance du mécanisme de l'articulation sans pour cela diminuer la sensiblité, à réaliser des articulations à grains du type représenté aux figures 3 et 4.

Dans ce cas, la couronne dentée 1', du flasque mobile 11 emploie toujours des dents de pas angulaire très faible, par exemple de 2°, que l'on peut facilement obtenir par une technologie parfaitement au point telle que le découpage fin.

La denture 12 des grains 13, 14, 15 a évidemment le même pas que la denture de la couronne 1', mais ces grains présentent, à leur partie arrière, deux côtés angulaires 13a, 13b, 14a, 14b, 15a, 15b leur permettant, lorsqu'ils sont repoussés (fig. 3), de se centrer suivant l'axe de leur guidage pour être prêts à pénétrer dans la dent de la couronne 10. Les guidages sont d'une largeur plus important que les grains. Le jeu équivaut à un déplacement latéral d'un angle de α/3 puisque, lorsque les grains seront repoussés dans la denture, ils prendront place suivant la position de la couronne 1, soit à un angle équidistant de 120°. Les grains pourront selon les cas des positions angulaires de la couronne 1', prendre appui sur les faces du flasque fixe semi-découpées 16 ou 17 ou 18.

Ainsi, lorsque sous l'effet de la commande, en général une came, les grains 13, 14, 15 sont repoussés vers la périphérie du flasque 11, c'est-à-dire que les dentures 12 de ces grains pénètrent dans la denture 1' du flasque mobile 11, les dents des grains pénètrent en fond de dent (voir fig. 4) mais leur axe radial pour les grains 14, 15 est décalé de +α/3 pour le grain 14 et +α/3 pour le grain 15 équivalant à des positions à 120° correspondant à la denture de la couronne 11 de façon que les côtés des grains 14, 15 prennent appui sur les flancs du secteur 16 en bloquant ainsi sans jeu le dossier par rapport à l'assise.

Comme dans le cas précédent, un déplacement angulaire de α/3 peut être obtenu aisément puisque c'est l'angle minimum choisi lorsque l'on décale les grains 13, 14, 15. Dans le sens d'abaissement du dossier vers ll'arrière, ce sont les grains 15 et 13 qui se trouvent décalés contre le secteur 17 alors que le pivotement vers l'avant du dossier de 1/3 de l'angle α provoque le déplacement angulaire des grains 13, 14 et leur coincement contre les parois latérales du secteur 18.

Aux figures 5 et 6, l'articulation est identique à l'articulation décrite en référence aux figures 3 et 4 mais les grains 13, 14 et 15 sont d'une hauteur plus faible de façon que leur partie inférieure présente une surface plane 13', 14', 15' qui vienne reposer sur la partie inférieure d'un dégagement 21 sensiblement en V prévu à la partie supérieure d'une pièce intermédiaire 22, 23, 24. Ces pièces intermédiaires sont en contact par leur zone inférieure 22a, 23a, 24a avec l'organe de commande qui est en général une came. Dans la position de verrouillage c'est-à-dire lorsque les grains 13, 14, 15 ne sont pas en prise avec la couronne dentée 1', les grains occupent la position représentée à la figure 5 tandis que, lorsque ces grains sont placés dans la position de verrouillage de la couronne dentée 1', les dents 12 des grains 13, 14, 15 sont en fond de dent de la couronne 10 mais les flancs 14b, 15a des grains 14, 15 prennent appui sur les côtés latéraux du dégagement 21 en V des pièces intermédiaires 23, 24 en assurant ainsi le coincement des grains comme cela a été expliqué ci-dessus pour les figures 3 et 4.

On obtient ainsi la possibilité, à l'aide d'une petite pièce facilement manœuvrable, de bloque les grains et bien entendu dans des positions nombreuses puisque le déplacement angulaire minimum est égal à α/3 comme expliqué dans ce qui précède.

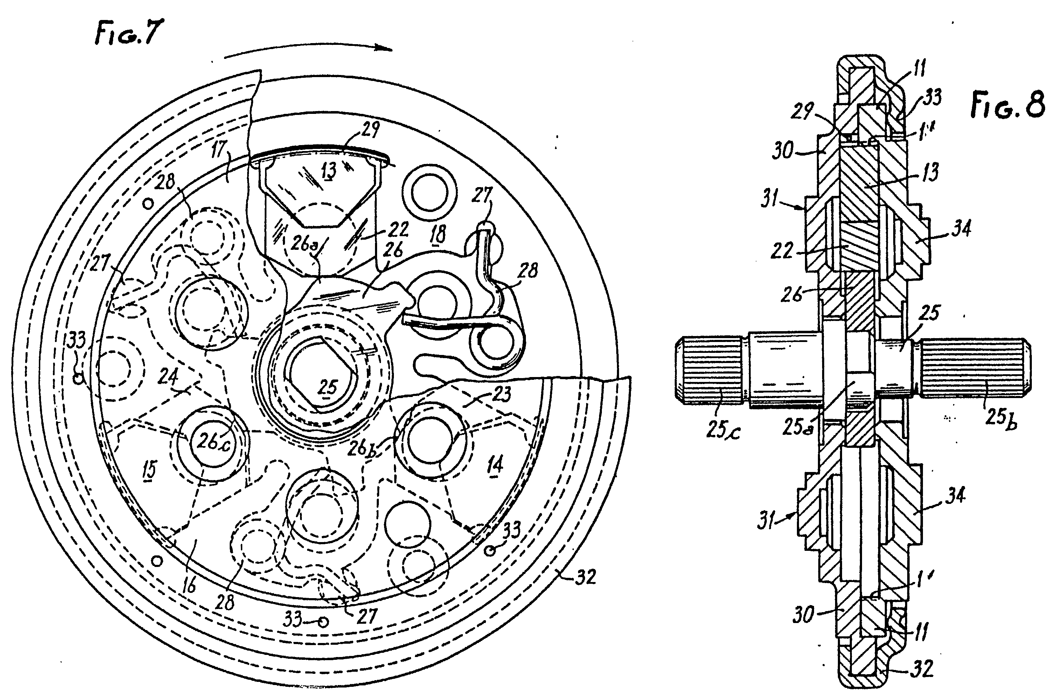

Finalement, aux figures 7 et 8, on a représenté une articulation complète dont l'arbre de commande central 25 porte, dans sa partie chanfreinée 25a, la came 26 présentant trois becs 26a, 26b, 26c destinés à coopérer avec les pièces intermédiaires 22, 23, 24 commandant le mouvement des grains 13, 14, 15 comme cela a été expliqué ci-dessus. De plus, les segments 16, 17, 18 sont conformés pour permettre, par des décrochements 27, la mise en place de ressorts 28 ayant en plan sensiblement la forme d'un V qui tend à repousser la came 26 contre les pièces intermédiaires 22, 23, 24 afin de bloquer les dents des grains en fond de la couronne dentée 1'. Comme cela est très visible aux figures 7 et 8, les grains, lorsqu'ils sont en fond de denture, déforment chacun une lame élastique de rappel 29 de façon à ce que ces grains puissent être dégagés aisément de la couronne dentée 10 lorsque la came 26, en ayant pivoté sous l'action de l'arbre de commande central 25, permet le dégagement, par rotation, des becs 26a, 26b, 26c des pièces intermédiaires 22, 23, 24 en assurant ainsi la libération du dossier du siège par rapport à l'assise de ce dernier.

A la figure 8, on constate que le flasque fixe 30, qui porte des pions de fixation 31 pour le relier à l'assise, maintient périphériquement une couronne circulaire 32 qui guide le flasque mobile 11 grâce à des emboutis de guidage 33 visibles tant à la figure 7 qu'à la figure 8. Il est à remarquer également que le flasque mobile 11 porte des pions de fixation 34 permettant de le relier aisément à l'armature du dossier. Cette fixation d'ailleurs est parfaitement connue. L'arbre central 25 présente (voir figure 8) une extrémité 25b cannelée pour la fixation de la commande manuelle ou moteur de l'articulation tandis que l'extrémité cannelée 25c de cet arbre 25 permet la liaison par exemple par l'intermédiaire d'un arbre creux entre les deux mécanismes de l'articulation placés de chaque côté du siège.

Dans certains cas, il est possible également de démultiplier la vitesse de rotation de l'arbre de commande central 25 au moyen d'un mécanisme réducteur pour assurer une commande plus douce et plus précise de l'articulation.

## Revendications

1. Articulation pour dossier de siège de véhicule ou applications analogues comportant des grains de verrouillage dans laquelle le flasque fixe (31) est conformé de façon à guider, au moyen de secteurs (8, 9, 10, 16, 17, 18), trois grains coulissants dont le pas de la denture supérieure correspond au pas de la denture (1 ou 1') de la couronne dentée du flasque mobile (2 ou 11), ces grains, normalement repoussés de la denture (1 ou 1') par des organes élastiques (29), étant décalés angulairement et soumis à la poussée d'un organe de commande tel qu'une came (26), caractérisée en ce que le décalage angulaire asymétrique de deux grains (4, 5; 14, 15) par rapport au premier grain (3, 13) est de 120° − α/3 c'est-à-dire que le décalage entre les deux autres grains est de 120°+2/3α, α étant l'angle correspondant au pas d'une dent de la couronne dentée ou des grains de façon qu'au moins l'un des grains (3; 13) pénètre à fond de dent dans la couronne dentée (1; 1') tandis que les dents des autres grains prennent appui en partie sur les faces opposées des dents de la couronne dentée (1; 1') en assurant ainsi un verrouillage de l'articulation du dossier par rapport à l'assise du siège.

2. Articulation suivant la revendication 1, caractérisée en ce que les grains dentés présentent des prolongements plus étroits en forme de queue (13c, 14c, 15c) tels que ces prolongements présentent un jeu de
par rapport aux faces en regard des secteurs du flasque fixe, les grains présentant en outre à leur partie supérieure des zones évasées (14a, 14b, 15a, 15b, 13a, 13b) qui coopèrent avec des zones dégagées (16a, 16b, 17a, 17b, 18a, 18b) des secteurs (16, 17, 18) du flasque fixe pour permettre, malgré le décalage angulaire de α/3 des deux autres grains par rapport au premier, leur centrage et leur pénétration dans la couronne dentée du flasque fixe lorsqu'ils sont repoussés par la commande à came (26).

3. Articulation suivant la revendication 1, caractérisée en ce que les grains présentent une face inférieure de portée restreinte (13', 14', 15') en appui sur la face supérieure évidée en forme de V (21) de pièces intermédiaires (22, 23, 24) pour permettre le centrage des grains et leur engagement à fond de dents dans la couronne dentée (10) du flasque mobile (11) malgré leur décalage angulaire asymétrique, la face inférieure des grains venant en appui contre les évidements en V correspondants (15a, 14b; figure 6) des pièces intermédiaires.

## Patentansprüche

1. Gelenk für die Rückenlehne eines Fahrzeugsitzes oder dergleichen mit Sperreinrichtungen, in welchem eine fixe Scheibe (31) so asugebildet ist, daß sie mittels der Segmente (8, 9, 10, 16, 17, 18) drei gleitende Schieber führt, deren obere Zahnteilung mit der Zahnteilung des Zahnkranzes (1 oder 1') der beweglichen Scheibe (2 oder 11) übereinstimmt, wobei diese, normalerweise mittels Federelementen (29) von der Verzahnung (1 oder 1') weggedrückten Schieber, winkelversetzt angeordnet sind und unter der Schubwirkung eines Steuerungselementes wie einer Nocke (26) stehen, dadurch gekennzeichnet, daß die asymetrische Winkelversetzung der beiden Schieber (4, 5; 14, 15) relativ zum ersten Schieber (3, 13) 120° − α/3 beträgt d.h. daß die Verschiebung zwischen den beiden anderen Schiebern 120° + 2/3α beträgt, wobei α jenen Winkel darstellt, der einem Zahnschritt des Zahnkranzes oder der Schieber entspricht, sodaß mindestens einer der Schieber (3; 13) vollständig in die Verzahnung des Zahnkranzes (1; 1') eingreift, während sich die Zähne der anderen Schieber auf entgegengesetzten Seiten der Zähne des Zahnkranzes (1, 1') teilweise abstützen, wodurch eine Sperre des Gelenks der Rückenlehne gegenüber dem Sitz bewirkt wird.

2. Gelenk nach Anspruch 1, dadurch gekennzeichnet, daß die gezahnten Schieber Verlängerungen in Form von schmäleren Endstücken (13c, 14c, 15c) aufweisen, die so ausgebildet sind, daß diese Endstücke gegenüber den Seiten der Segmente der fixen Scheibe ein Spiel von α/3 aufweisen und die Schieber überdies an ihrer Außenseite Ausbuchtungen (14a, 14b, 15a, 15b, 13a, 13b) aufweisen, die mit Ausnehmungen (16a, 16b, 17a, 17b, 18a, 18b) der Segmente (16, 17, 18) der fixen Scheibe zusammenwirken, wodurch trotz der Winkelversetzung von α/3 der beiden anderen Schieber relativ zum ersten Schieber ein Zentrieren und Eingreifen der Schieber in den Zahnkranz der fixen Scheibe ermöglicht wird, sobald von der Nockensteuerung (26) ein Schub auf die Schieber erfolgt.

3. Gelenk nach Anspruch 1, dadurch gekennzeichnet, daß die Schieber an ihrer Innenseite einer schmälere Auflagefläche (13', 14', 15') haben, die sich an der V-förmig vertieften Außenseite (21) der Zwischenstücke (22, 23, 24) abstützt, um ein Zentrieren und vollständiges Eingreifen der Schieber in den Zahnkranz (1') der beweglichen Scheibe (11) trotz ihrer asymmetrischen Winkelversetzung zu ermöglichen, wobei sich die Innenseite der Schieber gegen die entsprechenden Seiten der V-förmigen Ausnehmungen (15a, 14b; Fig. 6) der Zwischenstücke abstützt.

**Claims**

1. Articulation for vehicle seat back rests or similar applications comprising locking pawls, in which the fixed flange (31) is shaped in order to guide, by means of sector members (8, 9, 10, 16, 17, 18), three sliding pawls having an upper toothing of a pitch corresponding to the pitch of the toothing (1 or 1') of the toothed ring of the movable flange (2 or 11), these pawls, normally pushed back from the toothing (1 or 1') by elastic means (29), being angularly shifted and submitted to the bias of a control means such as a cam (26), characterized in that the asymetrical angular shift of two pawls (4, 5 or 14, 15) with respect to the first pawl (3, 13) is of 120° − α/3 which means that the shift between the two other pawls is of 120°+2/3α, α being the angle corresponding to the pitch of a tooth of the toothed ring or that of the pawls, whereby at least one of the pawls (3; 13) penetrates at tooth-bottom in the toothed ring (1 or 1') while the teeth of the other pawls will bear in part on the opposed surfaces of the teeth of the toothed ring (1; 1') by thus providing a locking of the articulation of the back rest with respect to the seating portion of a seat.

2. Articulation according to claim 1, characterized in that the toothed pawls have stem shaped narrower extensions (13c, 14c, 15c) so that these extensions have a play of α/3 with respect to the facing surfaces of the sector members of the fixed flange, the pawls are moreover provided, at their upper parts, with widened areas (14a, 14b, 15a, 15b, 13a, 13b) which cooperate with disengaged areas (16a, 16b, 17a, 17b, 18a, 18b) of the sector members (16, 17, 18) of the fixed flange for enabling, despite the angular shift of α/3 of the two other pawls with respect to the first one, their centering and their penetration in the toothed ring of the fixed flange when they are pushed-back by the cam control means (26).

3. Articulation according to claim 1, characterized in that the pawls have a restricted lower bearing surface (13', 14, 15') pressing on the V-shaped hollowed upper surface (21) of intermediate parts (22, 23, 24) for enabling the centering of the pawls and their engaging at teeth bottom in the toothed ring (10) of the mobile flange (11) despite their asymetrical angular shift, the lower surface of the pawls pressing on the corresponding V-shaped hollows (15a, 15b; Fig. 6) of the intermediary parts.

Fig.1

Fig.2

Fig.3

Fig.4

FIG.5

FIG.6

FIG.7

FIG.8

EP 0 250 290 B1